# EUROPEAN PATENT APPLICATION

(11) **EP 4 601 314 A1**
(43) Date of publication of application: **13.08.2025**
(21) Application number: 24157007.6
(22) Date of filing: 12.02.2024
(51) Int. Cl.: H04N 25/131, H04N 23/11, H04N 23/12, H04N 23/55, H04N 23/56, H04N 23/667, H04N 23/74, H04N 23/75, H04N 25/13

(54) **IMAGING SENSOR AND IMAGE CAPTURING DEVICE FOR CAPTURING IMAGES IN THE INFRARED AND VISIBLE SPECTRUM AND METHOD, COMPUTATIONAL UNIT AND COMPUTER PROGRAM FOR OPERATING SUCH AN IMAGE CAPTURING DEVICE**

(71) Applicant: Robert Bosch GmbH, 70442 Stuttgart (DE)
(72) Inventor: Marusczyk, Anika, Eindhoven (NL); Hartman, Martin, Eindhoven (NL); De La Haye, Stefan, Eindhoven (NL)

(57) **Abstract**

The invention proposes an imaging sensor (100, 200, 300, 4) for an image capturing device (1) configured to capture images in at least the infrared and the visible spectrum of light, the sensor (100, 200, 300, 4) comprising a number of infrared sensitive pixels (101, 102, 104), configured to detect incident light in at least one spectral range of the visible spectrum and also configured to detect incident light in the infrared spectrum, and a number of infrared insensitive pixels (103) configured to detect incident light in at least one spectral range of the visible spectrum and also configured to not detect incident light in the infrared spectrum.

Additionally, an image capturing device (1) with such a sensor (100, 200, 300, 4), a camera system (400), a method of operating such an image capturing device (1) or such a camera system (400) and a computational unit (9) and a computer program for performing the method are proposed.

## Description

The present invention relates to an imaging sensor for an image capturing device capable of capturing images in at least the infrared and the visible spectrum. Additionally, a camera system with such a sensor and a method of operating such an image capturing device or such a camera system are proposed.

### Technological background

Surveillance cameras are usually continuously operated and therefore different light conditions are expected. It commonly happens that there is not enough light to produce acceptable image quality, e.g. during night time. Typically, an RGB sensor comprises of a pattern of pixels that are sensitive to red, green and blue light while all pixels are innately sensitive to IR light. In order to distinguish between different colours (i.e. to minimize the influence of IR-light on the detected intensities) an IR-cut filter may be arranged in the optical path in front of the image sensor, such that the intensity of IR-light reaching the sensor is minimized. In such cases it is possible to switch the camera system to a night mode, e.g. by mechanically removing the IR cut filter in the optical path, such that the system can operate at enhanced sensitivity with the drawback of losing colour information. This so-called monochrome mode should therefore only be used when necessary in view of current lighting conditions. Similar concepts are also used for other camera systems, such as cameras in vehicles, which may be used for safety functionalities such as driver monitoring.

Cameras may be switched from day to night mode, once the image quality is minimally acceptable, which may, for example, be defined by the average luminance in view of camera settings such as exposure time, gain, etc. In night mode, i.e. when the IR-cut filter is not in the optical path, an IR-illumination may be used to enhance image quality without visibly illuminating the scene.

US 6,642,955 B1 describes a camera system that switches electronically between infrared radiation sensing and visible light sensing depending on ambient conditions. The camera is provided with a band-pass filter having a stop band between the infrared radiation spectrum and the visible light spectrum in order to provide high quality visible light images when not in the infrared mode and high quality mono infrared images when not in visible light mode. The band-pass filter assists in quantifying the ambient light for the switching control circuit.

### Summary of the invention

According to the invention, an imaging sensor for an image capturing device, an image capturing device, a camera system and a method as well as a computer program and a computational unit implementing the method, with the features of the respective independent claims are proposed. Advantageous embodiments are subject-matter of the dependent claims as well as this description.

The invention utilizes an imaging sensor for capturing images in the visible and infrared (IR) spectrum. Typically, colour sensitive sensor pixels are also sensitive to IR-radiation. Therefore, for imaging in the visible spectrum, an IR-filter is placed in the optical path in front of the sensor to prevent IR light from being detected. If imaging in the IR-spectrum is desired (typically when lighting conditions are not sufficient for imaging in the visible spectrum), this filter is removed from the optical path. The sensor according to the invention comprises a number of pixels which are insensitive to IR-radiation, e.g. by providing a pixel specific IR-filter to these pixels. These pixels are used to determine, if lighting conditions are good enough for imaging in the visible spectrum, during operating modes, in which the IR-filter is removed from the optical path. This enables switching to colour mode capturing as soon as lighting conditions suffice. In comparison, traditional solutions may switch from day (i.e. visible spectrum) to night (i.e. IR spectrum) mode once the image quality is minimally acceptable, which may be defined by the average luminance in view of camera settings such as exposure time, gain, etc. (Software Solution). For cameras having an infrared light (IR) illumination functionality, which is then operated during night mode, it is difficult to distinguish between the ambient light and the IR light. Therefore, the switching point back from night mode to day mode might be inaccurately determined and could be later than desired. To distinguish between IR and ambient light, Ambient Light Sensors (ALS) with an IR cut filter may be used. These have the drawback of adding additional costs and complexity to the system. The solution according to the present invention has the advantage that the IR-insensitive pixels correctly represent the field of view of the camera, especially in view of zooming, while respecting all of the system's design constraints. Furthermore, any additional sensor hardware (e.g. ALS) is obsolete, thereby saving costs and construction space.

In detail, the invention proposes an imaging sensor for an image capturing device configured to capture images in at least the infrared and the visible spectrum of light, the sensor comprising a number of infrared sensitive pixels, configured to detect incident light in at least one spectral range of the visible spectrum and also configured to detect incident light in the infrared spectrum, and a number of infrared insensitive pixels configured to detect incident light in at least one spectral range of the visible spectrum and also configured to not detect incident light in the infrared spectrum. The infrared insensitive pixels may, therefore, be used for assessing an overall lighting condition without interference from radiation in the infrared spectrum, thereby providing information about achievable image quality from the visible spectrum alone.

In at least one embodiment, the number of infrared insensitive pixels amounts to less than 10%, less than 5%, less than 2% or less than 1% of the number of infrared sensitive pixels. This is enough for sound determination of the lighting conditions and only minimally affects resolution during IR capturing mode.

In at least one embodiment, the infrared sensitive pixels comprise a first number of first pixels, configured to detect incident light in a first spectral range of the visible spectrum, and/or a second number of second pixels configured to detect incident light in a second spectral range of the visible spectrum, and/or a third number of third pixels configured to detect incident light in a third spectral range of the visible spectrum; and/or wherein the infrared insensitive pixels comprise a fourth number of fourth pixels configured to detect incident light in a fourth spectral range of the visible spectrum.

In at least one embodiment, the first spectral range, the second spectral range and the third spectral range are at least partially different from one another. This allows for polychrome image capturing.

In at least one embodiment, the fourth spectral range is at least partially identical with at least one of the first spectral range, the second spectral range and the third spectral range. This provides for easier data reduction as standardized image data reduction processes can be applied without any modification.

In at least one embodiment, the first pixels and/or the second pixels and/or the third pixels and/or the fourth pixels are arranged in a self-repeating pattern across the sensor. This warrants equal distribution and facilitates identification of the different captured spectral ranges across the sensor.

The invention further proposes an image capturing device comprising a sensor according to any of the above described embodiments and an optical filter arranged to be placed in and removed from an optical path in front of the sensor, wherein the filter is at least partially transparent for the first, second and third spectral ranges and opaque for the infrared spectrum. The camera profits from the advantages of the embodiment of the sensor used in an according manner.

Further, the invention proposes a camera system comprising such an image capturing device and an illumination device configured to illuminate a field of view of the image capturing device with radiation in the infrared spectrum. This enhances image quality during IR capturing mode.

Additionally, a method of operating an image capturing device or a camera system according to the invention is proposed, comprising in an infrared capturing mode, in which the optical filter is not in the optical path in front of the sensor, determining an intensity of incident light detected by the fourth pixels and placing the filter into the optical path in front of the sensor, if the intensity is greater than a predeterminable threshold. This method profits from the advantages discussed in relation to the embodiments of the sensor according to this invention in according manner.

A computational unit, e.g. a data processor of a camera, is configured to perform a method according to the invention, particularly by being programmed accordingly.

An implementation of a method according to the invention in the form of a computer program or product with program code for performing the method is advantageous, as this causes particularly low cost, especially in cases in which a data processor for executing the program is used for further tasks and is therefore already present and available. Finally, a machine-readable storage medium is proposed having a computer program as just described stored thereon. Suitable storage media or data carriers include magnetic, optic and electric memory, such as hard discs, flash-memory, EEPROMs, DVDs etc. Additionally, a download of a program via computer networks (internet, intranet, etc.) is possible. Such a download may be wire or cable-based or may be realised wirelessly (e.g. via a WiFi-network, a 3G, 4G, 5G or 6G-connection or based on other technologies or combinations thereof).

Further advantages and embodiments of the invention are derivable from the description and the appended drawing.

The invention is illustrated schematically shown in the drawing based on an exemplary embodiment and is described in the following with reference to the drawing.

### Brief description of the drawings

Figure 1 schematically depicts an imaging sensor according to an embodiment of the invention.
Figure 2 schematically depicts the embodiment of Figure 1 in a different view.
Figure 3 schematically depicts an alternative embodiment of an imaging sensor according to the invention.
Figure 4 schematically depicts a further alternative embodiment of an imaging sensor according to the invention.
Figure 5 schematically depicts a camera according to an embodiment of the invention.

### Embodiment(s) of the invention

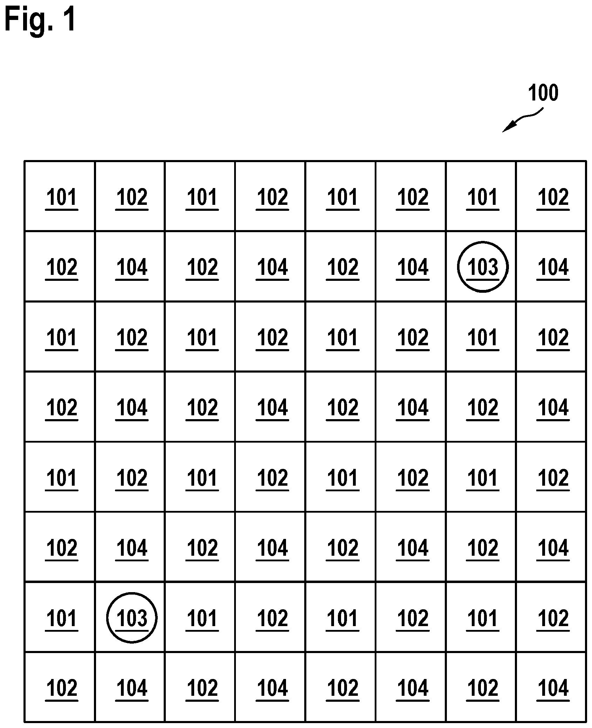

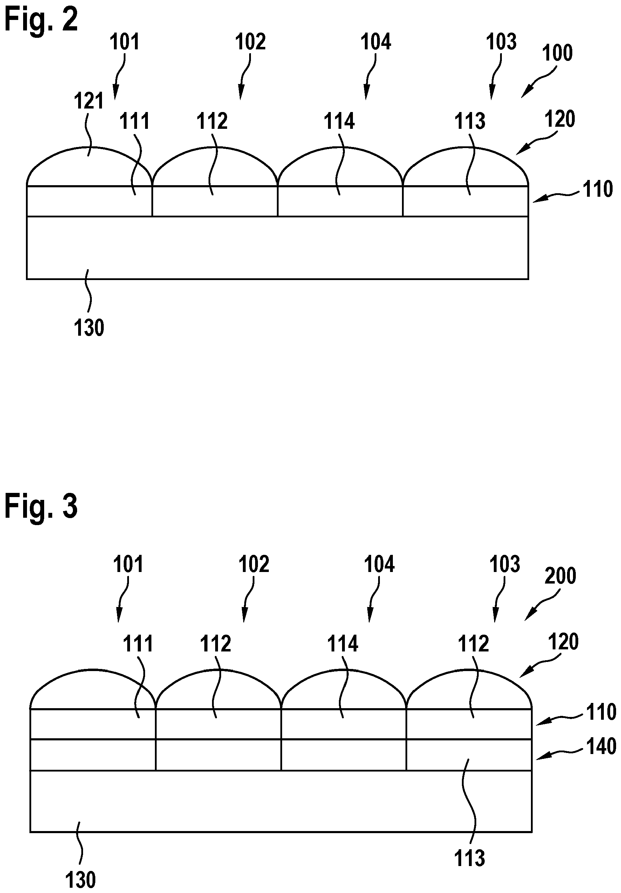

In Figure 1 an embodiment of an imaging sensor according to the invention is schematically depicted in a top view and generally referred to with 100. In Figure 2, the sensor 100 shown in Fig. 1 is schematically depicted in a side view.

The sensor 100 comprises pixels 101, 102, 103, 104, each of which is configured to detect incident light on the sensor 100 in the area, where the respective pixel 101, 102, 103, 104 is located. In the example shown here, there are four different pixel types:
First pixels 101 are sensitive in a first spectral range of the visible light spectrum (for this specification, the visible spectrum is regarded to include the optical wavelength spectrum from 380 nm to 750 nm). For example, the first spectral range may include the wavelength spectrum from 600 nm to 750 nm (red light).

Furthermore, the first sensor pixels 101 are sensitive in the infrared spectrum (for this specification, the infrared spectrum is regarded to include the optical wavelength spectrum from 780 nm to 1.5 µm).

Second pixels 102 are sensitive in a second spectral range of the visible light spectrum. For example, the second spectral range may include the wavelength spectrum from 500 nm to 600 nm (green light). Furthermore, the second sensor pixels 102 are sensitive in the infrared spectrum.

Third sensor pixels 104 are sensitive in a third spectral range of the visible light spectrum. For example, the third spectral range may include the wavelength spectrum from 380 nm to 500 nm (blue light). Furthermore, the third sensor pixels 104 are sensitive in the infrared spectrum

Fourth sensor pixels 103 are sensitive in a fourth spectral range of the visible light spectrum. The fourth sensor pixels 103 are insensitive to light in the infrared spectrum.

The fourth spectral range may include any of the first, second and third spectral ranges or any combination thereof or a spectral range that differs from all of these. In one embodiment, the fourth spectral range is at least partially identical with the second spectral range. For example, the fourth spectral range may include the wavelength spectrum from 500 nm to 600 nm (green light).

Typically, an RGB sensor comprises of a pattern of pixels that are sensitive to red, green and blue light, while all pixels are innately sensitive to IR light. The proposed solution can also be applied to any deviation of the common RGB pattern, such as pixels sensitive to other colours and/or arranged in a different pattern. As can be inferred from Fig. 1, the first 101, second 102 and third 104 pixels are arranged in essentially a Bayer pattern across the sensor 100, where in this specific case the fourth pixels 103 are also arranged on positions of the second pixels 102 within the Bayer pattern. It should be noted, however, that embodiments of the invention can also utilize different relative arrangements of the first 101, second 102, third 104 and fourth 103 pixels, which deviate from the here presented Bayer pattern. One such example of a different pattern is the so-called Quad-Bayer pattern, which is essentially a Bayer pattern in which instead of single pixels taking up the positions of the pattern, sets of four pixels of the same type are arranged according to the Bayer pattern, such that the smallest unit of repetition in the Quad-Bayer pattern is 4x4 pixels instead of 2x2 in the Bayer pattern. Entirely different arrangements may also be used in embodiments of the invention and the invention is also not limited to the specific spectral ranges disclosed in the context of the embodiment shown in the figures.

A Bayer pattern comprises green (second pixels 102), red (first pixels 101) and blue pixels (third pixels 104), wherein the green pixels cover half of the sensor surface and the red and blue pixels each cover one fourth of the sensor surface. The sensor pixels are arranged in lines and rows, in which green pixels always alternate with one of the other two pixel types (this is shown in Fig. 1; the fourth pixels 103 are in the Bayer positions of the second pixels 102).

In Figure 2, the sensor of Fig. 1 is shown in a schematic side view. The sensor comprises a sensor array 130, a colour filter array 110 and a micro-lens array 120 comprising a micro-lens 121 for every sensor pixel so as to focus incident light onto the area of the respective pixel.

The colour filter array 110 comprises a set of mutually different band-pass or colour filters 111, 112, 113, 114 corresponding to the respective sensor pixels 101, 102, 103 and 104, i.e. a first colour filter 111 is configured to let light in the first spectral range pass through the filter 111, a second colour filter 112 is configured to let light of the second spectral range pass, a third colour filter 114 is configured to let light of the third spectral range pass and a fourth colour filter 113 is configured to let light of the fourth spectral range pass, while all of the first, second, third and fourth colour filters 111, 112, 114, 113 substantially block light in other spectral ranges, particularly in other spectral ranges of the visible spectrum.

The fourth colour filter 113 comprises an infrared cut filter that substantially blocks IR-light from passing therethrough. For example, the fourth colour filter 113 may block more than 80%, more than 90% or more than 99% of IR-light from passing on to the sensor array area it covers. In other words, the fourth colour filter 113 is substantially opaque for light in the IR spectrum. In the example shown here, the fourth colour filter 113 is configured as an IR-cut filter only, i.e. it shows no selectivity in the visible spectrum and lets substantially all the spectral ranges of the visible spectrum (white light) pass equally. In alternative embodiments, the fourth colour filter 113 may, however, also have a selective transmission characteristic in the visible spectrum.

In Figure 3, an alternative embodiment of an imaging sensor is schematically shown in a side view and generally referred to with 200. The sensor 200 differs from sensor 100 particularly in the arrangement of the colour filter array. Specifically, sensor 200 comprises a dedicated IR-filter array 140, in which the fourth colour filters 113 are arranged, while the colour filter array 110 may be a traditional colour filter array, for example of the Bayer type, in which only the first 111, second 112 and third 114 colour filters are arranged according to the selected distribution pattern. The colour filter array 110 and the IR-filter array 140 may also be arranged reversely to the arrangement shown in the figure, i.e. in the direction of incoming light, the IR-filter array 140 may be the first layer to be passed after micro-lens array 120 and the colour filter array 110 may be the layer to be passed last before reaching the sensor array 130.

In the example show in Fig. 3, these fourth pixels 103 are also green pixels, since a second colour filter 112 is arranged in the colour filter array 110 in the position in which the IR-filter (fourth colour filter) 113 is arranged in the IR filter array 140. This enables using existing techniques for producing the colour filter array 110 without any modification by providing the additional IR filter array 140 for the IR-desensitization of the fourth pixels 103. Additionally, the fourth pixels 103 of the sensor 200 are selective in the visible spectrum as they are equipped with the additional second colour filter 112, such that they let only light in the second spectral range pass.

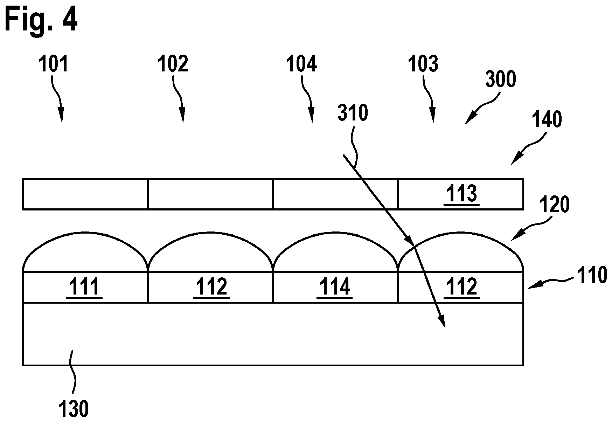

In Figure 4, a further alternative embodiment of an imaging sensor is shown and generally referred to with 300. In comparison to the sensor 200 of Fig. 2, the IR filter array 140 of sensor 300 is arranged in the optical path further away from the sensor array 130, namely on the further side of the micro-lens array 120. This is advantageous since existing sensors may be modified to be useful for the current invention, but has a drawback in that so-called "cross-talk" becomes more likely.

This cross-talk is illustrated with arrow 310, which represents an incident light at an angle with respect to the surface of sensor 300. The light passes the IR filter array outside the area covered by the fourth colour filter 113 but continues to reach the area of the sensor array 130 covered by it, i.e. it is registered by sensor pixel 103 although it has not passed through the fourth colour filter 113. Depending of the optical system upstream the sensor, this may cause greater or smaller inaccuracies.

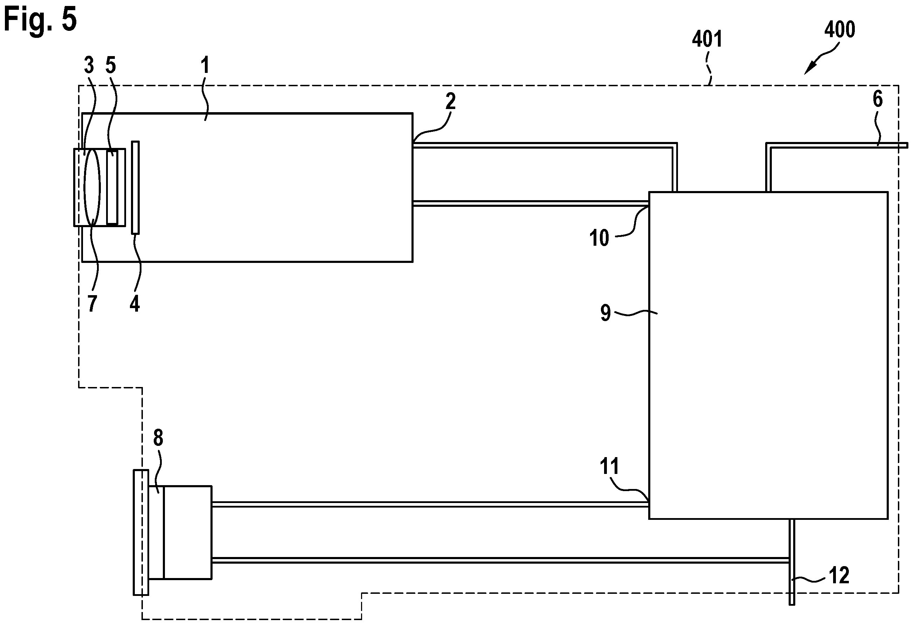

In Figure 5, a camera system is schematically depicted and collectively referred to with 400.

The camera system 400 comprises an image capturing device 1 with a sensor 4, which can be any of the above described sensors 100, 200, 300 or another embodiment of a sensor according to the invention. A lens system 7 and a removable IR-filter 5 are arranged in an optical path 3 upstream the sensor 4. The image capturing device 1 is configured to export a data signal, e.g. captured images, via a signal output 2.

The camera system 400 further comprises an illumination device 8, configured to illuminate a field of view of the image capturing device 1 with light in the infrared spectrum, and a data processor 9, which is configured to control the operation of both the image capturing device 1 and the illumination device 8. To this end, the data processor 9 is connected in a signal-transmitting manner to the image capturing device 1 (e.g. via a control line 10) and the illumination device 8 (e.g. via control line 11).

The camera system 400 can further comprise a housing 401, in which the components mentioned above are arranged. Such a camera system with housing is usually called camera or camera device.

The complete camera system 400, in the example shown, is powered from an electrical power supply 12.

The signal output 2 of the image capturing device 1 is connected to the data processor 9, which is configured to extract information about a light intensity captured by the fourth pixels 103 from the data signal. Since the fourth pixels are insensitive to light in the IR spectrum, any light detected by the fourth pixels 103 can be attributed to light in the fourth spectral range of the visible spectrum. In operation modes, in which the infrared filter 5 is removed from the optical path 3 (particularly, in such modes, the illumination device 8 will be controlled to illuminate the field of view of the sensor 4), intensities detected by any of the first 101, second 102 or third 104 pixels does not provide specific information about the intensity of available ambient light in the visible spectrum. However, the data processor 9 may extract such specific information from the data provided by the fourth pixels 103, such that it can be determined, if lighting conditions are sufficient for switching the image capturing device 1 to an operation mode, in which colour images may be captured, i.e. to place the IR filter 5 into the optical path 3 in front of the sensor 4, while arriving at a desirable image quality. To this end, the data processor 9 compares the intensity detected by the fourth pixels 103 to a predefinable threshold. The intensity detected by individual ones of the fourth pixels may, for example, be integrated or averaged before this comparison, or the comparison may be based on each individual pixel intensity or any number of individual pixel intensities. For example, if a certain number of pixels distributed across a wide surface of the sensor 4 detect intensities higher than the threshold, it may be determined that the threshold is generally exceeded, even if a number of other individual ones of the fourth pixels detect lower intensities. If the detected intensity is higher than the threshold, the IR filter 5 is placed in the optical path 3 and the illumination device 8 is switched off. In a case, in which the detected intensity is not higher than the threshold, the IR filter 5 remains removed from the optical path 3 and the illumination 8 device remains active. This enables a very targeted switching from IR capturing mode to colour capturing mode without substantially reducing image quality. Furthermore, the information is taken directly from the sensor reading. This means that the information is directly based on the current settings of the image capturing device 1, for example zoom, focus, field of view, etc. such that no further processing of the data is needed.

The data processor 9, in the example shown, is further configured to process data received from the signal output 2 of the image capturing device 1 and to export processed data (e.g. RGB-images, IR-images, corrected images, ...) via a data output 6.

## Claims

1. Imaging sensor (100, 200, 300, 4) for an image capturing device (1) configured to capture images in at least the infrared and the visible spectrum of light, the sensor (100, 200, 300, 4) comprising a number of infrared sensitive pixels (101, 102, 104), configured to detect incident light in at least one spectral range of the visible spectrum and also configured to detect incident light in the infrared spectrum, and a number of infrared insensitive pixels (103) configured to detect incident light in at least one spectral range of the visible spectrum and also configured to not detect incident light in the infrared spectrum.

2. Imaging sensor (100, 200, 300, 4) according claim 1, wherein the number of infrared insensitive pixels amounts to less than 10%, less than 5%, less than 2% or less than 1% of the number of infrared sensitive pixels.

3. Imaging sensor according to claim 1 or 2, wherein the infrared sensitive pixels comprise a first number of first pixels (101), configured to detect incident light in a first spectral range of the visible spectrum and/or a second number of second pixels (102) configured to detect incident light in a second spectral range of the visible spectrum and/or a third number of third pixels (104), configured to detect incident light in a third spectral range of the visible spectrum and/or wherein the infrared insensitive pixels comprise a fourth number of fourth pixels (103), configured to detect incident light in a fourth spectral range of the visible spectrum.

4. Imaging sensor (100, 200, 300, 4) according to claim 3, wherein the first spectral range, the second spectral range and the third spectral range are at least partially different from one another.

5. Imaging sensor (100, 200, 300, 4) according to claim 3 or 4, wherein the fourth spectral range is at least partially identical with at least one of the first spectral range, the second spectral range and the third spectral range.

6. Imaging sensor (100, 200, 300, 4) according to any one of claims 3 to 5, wherein the first pixels (101) and/or the second pixels (102) and/or the third pixels (104) and/or the fourth pixels (103) are arranged in a self-repeating pattern across the sensor (100, 200, 300, 4).

7. Imaging sensor (100, 200, 300, 4) according to any one of claims 3 to 6, wherein the first spectral range includes the wavelength spectrum from 600 nm to 750 nm; and/or wherein the second spectral range and/or the fourth spectral range include the wavelength spectrum from 500 nm to 600 nm; and/or wherein the third spectral range includes the wavelength spectrum from 380 nm to 500 nm.

8. Image capturing device (1) comprising an imaging sensor (100, 200, 300, 4) according to any one of the preceding claims and an optical filter (5) arranged to be placed in and removed from an optical path (3) in front of the sensor (100, 200, 300, 4), wherein the filter (5) is at least partially transparent for the first and/or second and/or third spectral ranges and opaque for the infrared spectrum.

9. Camera system (400) comprising an image capturing device (1) according to claim 8 and an illumination device (8) configured to illuminate a field of view of the sensor (100, 200, 300, 4) with radiation in the infrared spectrum.

10. Method of operating an image capturing device (1) according to claim 8 or a camera system (400) according to claim 9, comprising in an infrared capturing mode, in which the optical filter (5) is not in the optical path (3) in front of the sensor (100, 200, 300, 4), determining an intensity of incident light detected by the fourth pixels (103) and placing the filter (5) into the optical path (3) in front of the sensor (100, 200, 300, 4), if the intensity is greater than a predeterminable threshold.

11. Computational unit (9) configured to perform a method according to claim 10.

12. Computer program instructing a computational unit (9) to perform a method according to claim 10, if the program is executed on the computational unit (9).

13. Machine-readable storage medium with a computer program according to claim 12 stored thereon.
